**Europäisches Patentamt**

**European Patent Office**

**Office européen des brevets**

(11) Veröffentlichungsnummer: **0 316 826**
**A2**

## (12) EUROPÄISCHE PATENTANMELDUNG

(21) Anmeldenummer: 88118898.1

(22) Anmeldetag: 12.11.88

(51) Int. Cl.4: **B23B 31/44 , B23B 31/26**

(30) Priorität: 19.11.87 DE 8715314 U

(43) Veröffentlichungstag der Anmeldung:
24.05.89 Patentblatt 89/21

(84) Benannte Vertragsstaaten:
AT CH DE ES FR GB IT LI SE

(71) Anmelder: **BENZ WERKZEUG- UND MASCHINENBAU KG**

**D-7612 Haslach(DE)**

(72) Erfinder: **Wozar, J.-Andreas, Dipl.- Ing. (FH)**
**2 Weidenweg**
**D-7300 Esslingen/a.N.(DE)**

(74) Vertreter: **Magenbauer, Rudolf, Dipl.-Ing. et al**
**Patentanwälte Dipl.-Ing. Rudolf Magenbauer**
**Dipl.-Phys. Dr. Otto Reimold Dipl.-Phys. Dr.**
**Hans Vetter Hölderlinweg 58**
**D-7300 Esslingen(DE)**

(54) **Werkzeugmaschine.**

(57) Es handelt sich um eine Werkzeugmaschine, mit einem Werkzeughalter (7) für mindestens ein im Betrieb rotierendes Bearbeitungswerkzeug. Der Werkzeughalter (7) ist lösbar an die Arbeitsseite der Maschine ankuppelbar, wobei ein Zentrierkonus (21) seiner das Werkzeug triebenden Arbeitsspindel (14) in eine komplementäre Zentrieröffnung einer Maschinenspindel der Maschine unter Anlage beider Konusflächen einsteckbar ist. Hierbei stützt sich der Werkzeughalter (7) zusätzlich mit einer zur Maschine weisenden Abstützfläche an einer Gegenfläche der Maschine ab. Der Zentrierkonus (21) und die Arbeitsspindel (14) sind zwei separate Bauteile. Der Zentrierkonus (21) ist in Axialrichtung bewegbar geführt und verdrehfest an der Arbeitsspindel gelagert. Zwischen dem Zentrierkonus (21) und der Arbeitsspindel (14) ist eine Federanordnung (37) vorgesehen, die den Zentrierkonus (21) gegenüber der Arbeitsspindel (14) in Einsteckrichtung vorspannt.

FIG. 1

EP 0 316 826 A2

## Werkzeugmaschine

Die Erfindung betrifft eine Werkzeugmaschine wie Bohr-oder Fräsmaschine, mit einem Werkzeughalter für mindestens ein zu einer Rotationsbewegung antreibbares Bearbeitungswerkzeug, der lösbar an die Arbeitsseite der Maschine ankuppelbar ist, wobei ein Zentrierkonus seiner das Werkzeug treibenden Arbeitsspindel in eine komplementäre Zentrieröffnung einer motorisch antreibbaren Maschinenspindel der Maschine unter Anlage beider Konusflächen einsteckbar ist und wobei sich der Werkzeughalter zusätzlich mit mindestens einer zur Maschine weisenden Abstützfläche in Einsteckrichtung an einer zugewandten Gegenfläche der angekuppelten Maschine abstützt.

Bei Werkzeugmaschinen der eingangs genannten Art, z.B. Bohr- oder Fräsmaschinen od.dgl., erfolgt die Halterung der Bearbeitungswerkzeuge über einen Werkzeughalter. Dieser kann derart ausgebildet sein, daß er Befestigungsmöglichkeiten für mehrere Werkzeuge nebeneinander aufweist oder aber lediglich zur Halterung eines einzigen Werkzeuges geeignet ist. Die Halterung kann u.U. direkt an der Arbeits spindel erfolgen, oder aber jeweils über eine separate Antriebsspindel, die mit der Arbeitsspindel über ein Getriebe im Werkzeughalter verbunden ist. Jedenfalls erfolgt der Antrieb des jeweiligen Werkzeuges über die Arbeitsspindel, die zu diesem Zwecke lösbar mit der motorisch zu einer Rotationsbewegung antreibbaren Maschinenspindel der Werkzeugmaschine gekuppelt ist. Die Kupplung erfolgt auf Kraftschlußbasis, indem der Zentrierkonus der Arbeitsspindel in eine entsprechend komplementär konisch ausgebildete Zentrieröffnung an der Stirnseite der Maschinenspindel in Axialrichtung eingesteckt und hernach unter Vermittlung einer maschinenseitigen Greif- oder Schraubvorrichtung in dieser Öffnung festgespannt wird. Zusätzlich zu der Zentrierung ist eine Abstützung für den Werkzeughalter vorgesehen, indem dieser im angekuppelten Zustand mit einer Abstützfläche an einer entsprechenden Gegenfläche der Werkzeugmaschine anliegt.

Hierdurch werden insbesondere Axialkräfte aufgenommen, aber auch bei Kippkräften, die insbesondere dann auftreten, wenn am Werkzeughalter außerhalb der Längsachse Werkzeuge montiert sind, erfolgt eine Abstützung. Allerdings tritt bisher der Nachteil auf, daß infolge der beiden parallelen Lagerungen häufig eine Überbestimmung auftritt. Denn eine Werkzeugmaschine wird üblicherweise mit mehreren Werkzeughaltern betrieben, deren Zentrierkonusse maßlichen Toleranzen unterworfen sind, so daß im angekuppelten Zustand in Abhängigkeit von der jeweiligen Konus- bzw. Kegelpaarung unterschiedliche axiale Einbautiefen auftreten. Dies kann zur Folge haben, daß entweder die beiden Abstütz- bzw. Gegenflächen bereits aneinander anliegen, wenn der Zentrierkonus noch nicht vollständig in der Zentrieröffnung einsitzt, oder daß die durch die Konuspaarung vorgegebene Einbautiefe bereits erreicht wird, während die Abstütz-und Gegenflächen einander gegenüber noch beabstandet sind.

Es ist daher ein Ziel der vorliegenden Erfindung, eine Werkzeugmaschine der eingangs genannten Art zu schaffen, bei der derartige Überbestimmungen im Bereich der Lagerung des Werkzeughalters an der Werkzeugmaschine ausgeschlossen sind.

Dieses Ziel wird dadurch erreicht, daß der Zentrierkonus und die Arbeitsspindel zwei separate Bauteile sind, daß der Zentrierkonus in Axialrichtung bewegbar geführt und gleichzeitig verdrehfest an der Arbeitsspindel gelagert ist und daß zwischen dem Zentrierkonus und der Arbeitsspindel eine Federanordnung vorgesehen ist, die den Zentrierkonus gegenüber der Arbeitsspindel in Einsteckrichtung vorspannt. Auf diese Weise ist gewährleistet, daß der jeweils verwendete Werkzeughalter im angekuppelten Zustand mit seiner Abstützfläche satt an der Gegenfläche anliegt, während gleichzeitig eine exakte Zentrierung über die Konuspaarung erfolgt. Etwaigen Maßtoleranzen hinsichtlich der Einbautiefe bzw. hinsichtlich des Abstandes zwischen Abstütz- und Gegenfläche bei eingestecktem Konus wird durch die axiale Bewegbarkeit bzw. Verschiebbarkeit des Zentrierkonus gegenüber der Arbeitsspindel Rechnung getragen. Der Zentrierkonus wird jeweils so weit entgegen der Einsteckrichtung und entgegen der Federkraft verschoben, bis sowohl die beiden Abstütz- bzw. Gegenflächen aneinander anliegen als auch der Zentrierkonus satt in der Zentrieröffnung einsitzt. Die auf die Arbeitsspindel wirkende axiale Einzugskraft erfährt auf diese Weise eine summarische Aufteilung in eine am Konus angreifende Axialkraft und eine an den genannten Flächen angreifende Abstützkraft. Alles in allem erhält man eine präzise Zentrierung kombiniert mit einer effektiven Abstützung bei Quer- und Kippkräften.

Vorteilhafte Weiterbildungen der Erfindung sind in den Unteransprüchen aufgeführt.

Vorzugsweise ist der Zentrierkonus hülsenförmig ausgebildet, wobei er die Arbeitsspindel koaxial und in Axialrichtung verschiebbar umgibt. Zweckmäßigerweise ist auch die Federanordnung von ringförmiger, die Arbeitsspindel umgebender Gestalt, so daß eine gleichmäßige Abstützung gegenüber dem Zentrierkonus erfolgt. Zur Abstützung gegenüber der Arbeitsspindel ist an dieser zweckmäßigerweise ein umlaufender, radial vorstehender Ringbund vorgesehen, gegen den die Federanordnung arbeiten kann, der andererseits vorzugsweise der Zentrierkonus mit seiner Stirnseite gegenüberliegt. Der Ringbund ist insbesondere einstückig mit der Arbeitsspindel ausgebildet, was eine präzise Fertigung erlaubt. Von Vorteil ist es dabei, den Ringbund als Greifflansch mit umlaufender Greiferrille auszugestalten, so daß er gleichzeitig zum Ansetzen eines Greifwerkzeuges dienen kann, mit dessen Hilfe eine Positionierung oder ein Wechseln des Werkzeughalters durchführbar ist. Da der Greifflansch mithin weiterhin starr an der Arbeitsspindel angeordnet ist, wird die Handhabung des Werkzeughalters dadurch nicht negativ beeinträchtigt.

Als Federanordnung ist vorteilhafterweise die Verwendung mindestens einer Tellerfeder vorgesehen, wobei zweckmäßigerweise mehrere Tellerfedern in Axialrichtung aneinandergereiht zu einem Tellerfederpaket zusammengesetzt sind. Zugunsten einer kompakten Bauweise bietet es sich dazuhin an, an der zugewandten Stirnseite des Zentrierkonus eine ringförmige Vertiefung vorzusehen, in die die Federanordnung zumindest zum Teil eintauchen kann. Durch den in Axialrichtung aus der Vertiefung herausragenden Federabschnitt kann somit der mögliche Verschiebeweg des Zentrierkonus vorgegeben werden. Als besonderer Vorteil erweist es sich, die Druckkraft der Federanordnung einstellbar zu gestalten bzw. den möglichen axialen Verstellweg des Zentrierkonus insbesondere stufenlos verstellbar und einstellbar auszubilden. Auf diese Weise kann verschiedenen Belastungsarten des Werkzeughalters individuell Rechnung getragen werden. Treten beispielsweise vorwiegend Querkräfte auf, z. B. bei Fräsarbeiten, so werden hohe Zentrierkräfte gewünscht, die sichergestellt werden können, indem der mögliche Federweg erhöht wird. Denn auf diese Weise erfolgt beim Ankuppeln zuerst eine Vereinigung der beiden Konusse, die in der Folge den Hauptteil der Einzugskraft aufnehmen. Wird hingegen der mögliche Federweg bzw. Verschiebeweg reduziert, so wird der Großteil der Einzugs kraft von den miteinander korrespondierenden Abstütz-bzw. Gegenflächen aufgenommen, was erstrebenswert ist, wenn hohe Axial- bzw. Kippkräfte zu erwarten sind.

Als Einstellmöglichkeit ist zweckmäßigerweise auf der zur Maschine weisenden Einsteckseite des Zentrierkonus ein in Axialrichtung verstellbares Stellorgan, z.B. eine Stellschraube oder eine Stellmutter, vorgesehen, an der der Zentrierkonus insbesondere mit seiner einsteckseitigen Stirnseite anliegt. Der Zentrierkonus befindet sich also insbesondere zwischen dem Ringbund und dem Stellorgan, wobei seine axiale Länge geringer ist als der Abstand zwischen Ringbund und Stellorgan und wobei er federbelastet gegen das Stellorgan vorgespannt ist. Zum Einstellen der Federkraft kann auch eine an der Arbeitsspindel angeordnete Stellmutter vorgesehen sein; zusätzlich oder alternativ besteht aber auch die Möglichkeit, die Federkraft durch Zwischenfügen von Distanzscheiben zu beeinflussen.

Zugunsten einer kompakten Bauweise des Werkzeughalters kann vorgesehen werden, die Gegenfläche für die Abstützfläche des Werkzeugshalters an der Maschinenspindel und hierbei insbesondere an der die Zentrieröffnung umgebenden stirnseitigen Randpartie der Maschinenspindel vorzusehen. Die am Werkzeughalter vorgesehene Abstützfläche ist hierbei vorzugsweise an der Arbeitsspindel angeordnet, so daß die korrespondierenden Flächen zwar eine Rotationsbewegung ausführen, einander gegenüber jedoch in Ruhe sind. Von Vorteil ist es hierbei insbesondere, die Abstützfläche an der zum Zentrierkonus weisenden Stirnfläche des Ringbundes bzw. des Greifflansches anzuordnen.

Es ist auch möglich, insbesondere bei größer dimensionierten Werkzeughaltern, die Gegenfläche für die Abstützfläche des Werkzeughalters am Maschinenspindelkasten vorzusehen.

Um der infolge des verschiebbaren Konus erhaltenen präzisen Lagerung Rechnung zu tragen, ist es zweckmäßig, die Arbeitsspindel im Werkzeughalter über eine insbesondere spielfreie Radial-Axial-Lageranordnung zu lagern, die sowohl Radialkräfte als auch in beide Richtungen wirkende Axialkräfte, d. h. Zug- und Druckkräfte, aufnehmen kann. Hierbei ist das Lagerspiel zweckmäßigerweise einstellbar. Vorzugsweise enthält die Lageranordnung dabei ein insbesondere als Rollenlager oder Nadellager ausgebildetes Radiallager, das beidseits jeweils von einem Axial-Drucklager flankiert ist. Aus Gründen der Platzersparnis kann jedoch auch ein kombiniertes Radial-Axiallager Verwendung finden.

Die Erfindung wird nachfolgend anhand der beiliegenden Zeichnung näher erläutert. In dieser zeigen:

Fig. 1 einen Ausschnitt aus einer ersten Bauform der erfindungsgemäßen Werkzeugmaschine im Bereich der Lagerung des Werkzeughalters im Längsschnitt gemäß Schnittlinie I-I aus Fig. 2,

Fig. 2 eine Vorderansicht des Werkzeughalters aus Fig. 1 gemäß Pfeil II,

Fig. 3 einen Längsschnitt durch den Kupplungsbereich zwischen Werkzeugmaschine und Werkzeughalter bei einem weiteren Ausführungsbeispiel und

Fig. 4 ein weiteres Ausführungsbeispiel der Werkzeugmaschine im Ausschnitt in einer Darstellung analog Fig. 3.

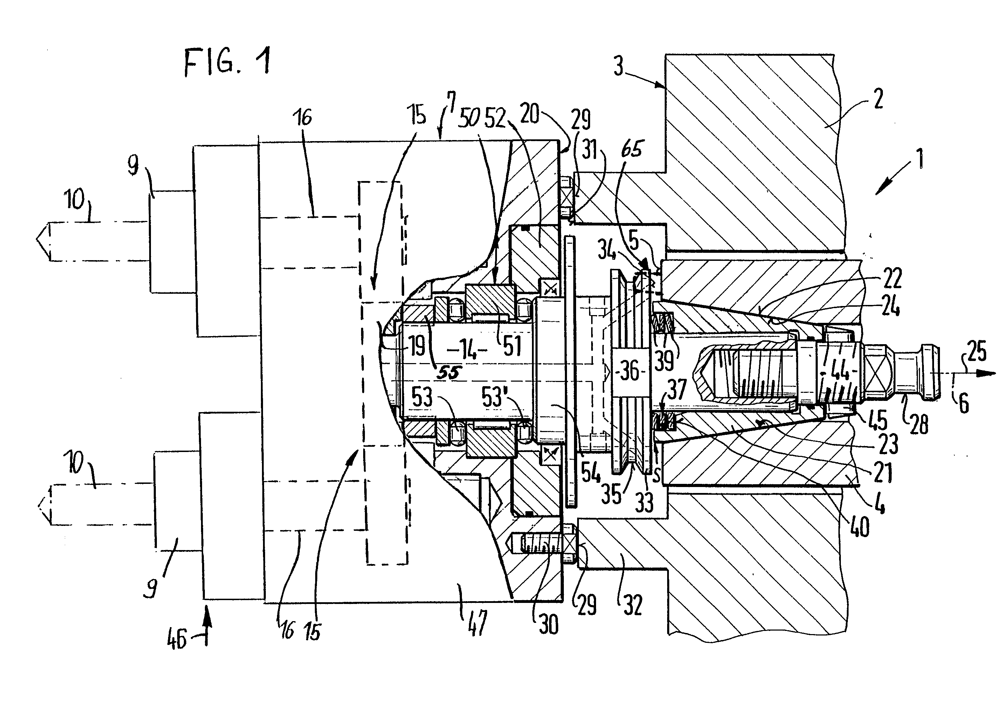

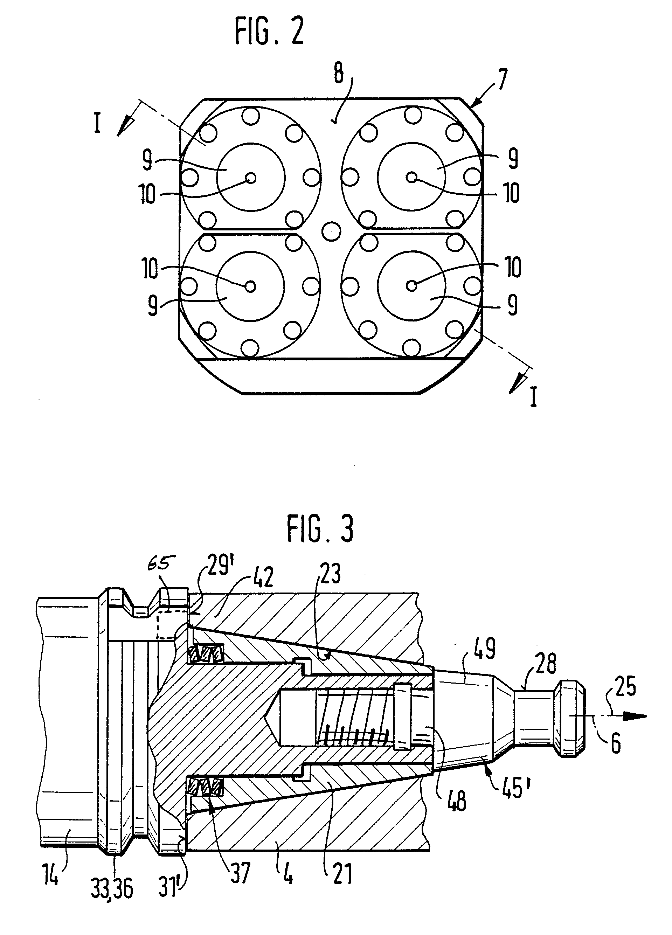

Bei der in den Fig. 1 und 2 lediglich teilweise abgebildeten Werkzeugmaschine 1 handelt es sich um eine Bohrmaschine.

Man erkennt mit dem Bezugszeichen 2 den an der Arbeitsseite 3 der Werkzeugmaschine 1 angeordneten Maschinenspindelkasten 2, der ein nicht näher dargestelltes Getriebe enthalten kann und eine Maschinenspindel 4 aufweist. Sie weist mit ihrer äußeren Stirnseite 5 nach außen zur Arbeitsseite 3 hin und steht im Innern der Maschine mit einem nicht näher dargestellten Antriebsmotor in Verbindung, der in der Lage ist, sie zu einer Rotationsbewegung um ihre Längsachse 6 anzutreiben. An die Werkzeugmaschine 1 ist lösbar ein Werkzeughalter 7 angekuppelt, der an seiner der Maschine entgegengesetzten axialen Bearbeitungsseite 8 vier in den Ecken eines Rechtecks angeordnete Spannfutter 9 für jeweils ein Bearbeitungswerkzeug 10 aufweist. Als Bearbeitungswerkzeuge 10 sind Bohrer vorgesehen, die einzeln oder zu mehreren gleichzeitig gespannt sein können. Über eine noch zu beschreibende Kraftfluß linie steht jedes der Spannfutter 9 in Antriebsverbindung mit einer im Werkzeughalter 7 drehbar gelagerten Arbeitsspindel 14, die im angekuppelten Zustand des Werkzeughalters 7 drehfest mit der Maschinenspindel 4 verbunden ist.

Im Betrieb der Werkzeugmaschine 1 führt die Maschinenspindel 4 eine Drehbewegung um ihre Längsachse 6 aus, die sie insbesondere schlupffrei auf die in koaxialer Verlängerung angeordnete Arbeitsspindel 14 überträgt, so daß diese mit der gleichen Umdrehungszahl umläuft. Über jeweils ein schematisch dargestelltes Getriebe 15 wird die Drehbewegung der Arbeitsspindel 14 auf jeweils eine Antriebsspindel 16 für eines der Spannfutter 9 übertragen, welche Antriebsspindeln 16 parallel zur Arbeitsspindel 14 verlaufend dieser gegenüber beabstandet im Innern des Werkzeughalters 7 gelagert sind.

Beim Werkzeughalter der erfindungsgemäßen Werkzeugmaschine kann es sich durchaus auch um ein Bauteil handeln, das zum Spannen mehr oder weniger aus der beschriebenen Anzahl von Bearbeitungswerkzeugen 10 geeignet ist. So kann es sich durchaus um einen Werkzeughalter handeln, der getriebelos ausgebildet ist und an dem lediglich ein Werkzeug - und zwar direkt - an der Arbeitsspindel 14 spannbar ist.

Die Arbeitsspindel 14 ragt an der der Arbeitsseite 3 zuge wandten Maschinenseite 20 des Werkzeughalters 7 aus diesem heraus und trägt hier an seinem axialen Endbereich einen Zentrierkonus 21 mit konischer bzw. kegelförmiger Mantelbzw. Konusfläche 22. Er verläuft koaxial zur Arbeitsspindel 14, wobei sein Abschnitt geringeren Durchmessers vom Werkzeughalter 7 wegweist.

Zur Übertragung des Antriebsdrehmoments ist dieser Zentrierkonus 21 in Axialrichtung in eine am zugewandten stirnseitigen Endbereich der Maschinenspindel 4 vorgesehene Zentrieröffnung 23 eingesteckt, deren Innenfläche eine zur Konusfläche 22 komplementär und damit ebenfalls konisch bzw. kegelförmig ausgebildete Konusfläche 24 darstellt. Die Kraftübertragung erfolgt also per Reibschluß bzw. Kraftschluß, wobei der Konus 21 in Einsteckrichtung 25 mittels einer nicht näher dargestellten maschinenseitigen Greifvorrichtung in die Zentrieröffnung 23 hineingezogen wird. Die beiden Konusflächen 22, 24 bilden dadurch die das Drehmoment übertragenden Reibflächen; das Ansetzen der Greifvorrichtung wird beim Ausführungsbeispiel durch eine am axialen Ende der Arbeitsspindel 14 vorgesehene Greifnut 28 erleichtert.

Es kann selbstverständlich auch vorgesehen sein, den Zentrierkonus 21 unter Vermittlung einer Verschraubung od. dgl. ins Innere der Zentrieröffnung 23 hineinzuziehen.

Um den Werkzeughalter 7 zusätzlich zur Zentrierung auch gegen auftretende Quer- bzw. Kippkräfte abzusichern, sind an der Maschinenseite 20 des Werkzeughalters 7 über den Umfang der Arbeitsspindel 14 verteilt mehrere Abstützflächen 29 vorgesehen - hier gebildet von der Kopfoberfläche stirnseitig eingebrachter Montageschrauben 30 -, die sich jeweils an einer gegenüberliegend an der Maschine 1 angeordneten Gegenfläche 31 abstützen. Die Gegenfläche 31 ist beim Ausführungsbeispiel von der entgegen der Einsteckrichtung 25 weisenden Stirnseite eines am Spindelkasten angeformten Kragens 32 gebildet, der diesem gegenüber in Axialrichtung vorsteht und die Arbeitsspindel 14 mit radialem Spiel koaxial umgibt. Die Anpreßkraft zwischen den beiden Flächen 29, 31 wird von der Einzugskraft des Zentrierkonus 21 aufgebracht.

Erfindungsgemäß ist nun vorgesehen, daß der Zentrierkonus 21 und die Arbeitsspindel 14 zwei separate Beauteile sind, wobei der Konus 21 in Axialrichtung bewegbar geführt und gleichzeitig verdrehfest an der Arbeitsspindel 14 gelagert ist. Ferner ist zwischen Konus 21 und Arbeitsspindel 14 eine Federanordnung 37 vorgesehen, die den Zentrierkonus gegenüber der Arbeitsspindel 14 in Einsteckrichtung 25, d. h. in Axialrichtung 6 zum Spindelkasten 2 hin, vorspannt. Auf diese Weise erreicht man eine in Axialrichtung nachgiebige Aufhängung des Zentrierkonus 21, wodurch Überbestimmungen hinsichtlich der axialen Lagefixierung zwischen der Konuspaarung 22, 24 und der Flächenpaarung 29, 31 ausgeschlossen sind. Hierdurch ist auch bei aufeinanderfolgender Verwendung mehrerer Werkzeughalter 7 gewährleistet, daß unabhängig von vorhandenen Maßtoleranzen der Zentrierkonusse 21 sowohl ein sattes Anliegen aneinander der beiden Flächen 29, 31 als auch der Konusflächen 22, 24 gewährleistet ist.

Beim Ausführungsbeispiel handelt es sich um eine Werkzeugmaschine 1, die im Rahmen eines Bearbeitungszentrums eingesetzt wird, wobei die Werkzeughalter von entsprechenden Vorrichtungen selbsttätig automatisch ausgetauscht werden. Zu diesem Zweck trägt die Arbeitsspindel 14 am herausragenden Bereich einen in Radialrichtung vorstehenden, umlaufenden und koaxial angeordneten Ringbund 33 mit in Einsteckrichtung 25 weisender planer Ringfläche 34. In den Außenumfang ist eine Greiferrille 35 eingebracht, die den Angriff eines entsprechenden Greifwerkzeuges erlaubt; ferner kann der Ringbund 33 bei Bedarf mit Unterbrechungen 36 versehen sein.

Der Ringbund 33 bildet hier also einen Greifflansch, der vorteilhafterweise als ein Bauteil, d. h. einstückig, mit der Arbeitsspindel 14 ausgebildet ist und dessen vom Werkzeughalter 7 wegweisende Ringfläche 34 eine Anlagefläche für die hier ringförmig ausgebildete und koaxial auf die Arbeitsspindel 14 aufgezogene Federanordnung 37 bildet. Diese stützt sich andererseits so am Zentrierkonus 21 ab, daß zwischen diesem und der Ringfläche 34 ein Spalt s besteht, der den Federweg bzw. Verstellweg des Zentrierkonus 21 vorgibt. Letzterer ist beim Ausführungsbeispiel hülsenförmig ausgebildet und ebenfalls auf die Arbeits spindel 14 aufgesteckt, so daß sich die Federanordnung 37 zwischen Konus 21 und Ringbund 33 befindet. Als Federanordnung sind zweckmäßigerweise mehrere in Axialrichtung aufeinanderfolgend angeordnete ringförmige Tellerfedern 39 gewählt, die zu einem Federpaket zusammengestellt sind und zur Begrenzung der Baulänge in einer ringförmigen Vertiefung 40 an der zugewandten Stirnseite des Konus 21 zum Teil einsitzen.

Auch eine andere Federanordnung kann u. U. gewählt werden, wenn sie den gleichen Zweck erfüllt.

Als besonderer Vorteil ist bei der Erfindung vorgesehen, daß die Druckkraft der Federanordnung 37 einstellbar ist, wobei hinzukommt, daß gleichzeitig auch der maximale axiale Verstellweg des Zentrierkonus 21 gegenüber der Arbeitsspindel 14 vorteilhafterweise stufenlos einstellbar ist. So ist gemäß Fig. 1 am Endbereich der Arbeitsspindel 14 innerhalb der Greifnut 28 ein Außengewinde 44 angeordnet, auf dem sich eine Stellmutter 45 in Axialrichtung verschrauben läßt, die mit ihrer einen Seite gegen die zugewandte Stirnseite des Zentrierkonus 21 arbeitet, der in Axialrichtung gesehen zwischen ihr und dem Ringbund 33 auf der Arbeitsspindel 14 sitzt. Durch Verstellen der Mutter 45 läßt sich der Spalt s variieren und somit den jeweiligen Gegebenheiten anpassen. Damit ist vor allem die Möglichkeit gegeben, bei z.B. in Pfeilrichtung 46 auf den Werkzeughalter 7 wirkenden Querkräften die Zentrier kraft der Kupplungsverbindung dadurch zu erhöhen, daß zuvor der Spalt s durch entsprechendes Verschrauben der Mutter 45 vergrößert wird. Der Großteil der in Pfeilrichtung 25 wirkenden Einzugkraft wird dadurch von der Konuspaarung aufgenommen. Sind hingegen größere Axial- oder Kippkräfte zu erwarten, so kann der Spalt s bis auf Null verringert werden, so daß der Großteil der Einzugkraft auf die Flächenpaarung 29, 31 übertragen wird. Bei geringerer Federvorspannung erhält man also eine maximale zwischen den Flächen 29, 31 wirkende Einzugkraft.

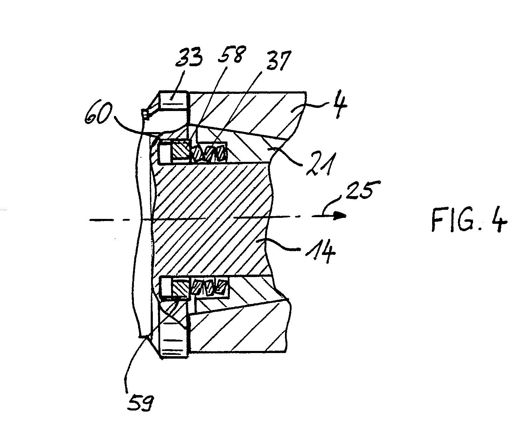

Bei dem in Fig. 4 abgebildeten Ausführungsbeispiel kann die Kraft der Federanordnung 37 auf eine andere Art und Weise eingestellt werden, die zusätzlich oder alternativ zu den bisher beschriebenen Einstellmöglichkeiten verwirklicht werden kann. Man erkennt wiederum die Maschinenspindel 4, in die - analog zu Fig. 3 - der die Arbeitsspindel 14 umgebende Zentrierkonus 21 eingesteckt ist. Die Federanordnung 37 stützt sich einerseits am Zentrierkonus 21 ab, arbeitet jedoch nunmehr an der entgegengesetzten Seite nicht unmittelbar gegen den Ringbund 33, sondern vielmehr mittelbar über eine Stellmutter 58. Diese ist mit einem Außengewinde 59 versehen, mit dem sie in einer ringförmigen Gewindeausnehmung 60 in Axialrichtung verstellbar einsitzt, welche Ausnehmung von der Seite des Zentrierschaftes 21 her in den Ringbund 33 eingelassen ist. Entsprechend der eingestellten Einschraubtiefe wird die an der Stellmutter 58 anliegende Federanordnung 37 mehr oder weniger stark in Einsteckrichtung 25 vorgespannt, und es kann auf diese Weise eine einfache Variierung der Federvorspannung erfolgen.

Bei einem weiteren, nicht dargestellten Ausführungsbeispiel ist vorgesehen, in die Verbindung zwischen Ringbund 33, Federanordnung 37 und Zentrierschaft 21 Distanzelemente vorzugsweise in Gestalt ringförmiger Distanzscheiben zwischenzufügen, so daß entsprechend der Wahl der Dicke der Distanzscheiben bzw. entsprechend der Wahl ihrer Anzahl die wirkende Federkraft eingestellt werden kann.

Bei dem in Fig. 3 abgebildeten Ausführungsbeispiel stützt sich die maschinenseitige Gegenfläche 31′ nicht wie in Fig. 1 an einer mit dem im Betrieb stillstehenden Werkzeughalter-Gehäuse 47 verbundenen Abstützfläche ab, vielmehr ist hier die Abstützfläche 29′ drehfest mit der Arbeitsspindel 14 verbunden und rotiert zusammen mit dieser. Dabei ist es von Vorteil, auch die maschinenseitige Gegenfläche 31′ mitbewegt auszubilden; sie befindet sich daher an der Maschinenspindel 4. Von Vorteil ist es hierbei, die Gegenfläche 31′ an der Stirnseite der Maschinenspindel 4 auszubilden, wobei sie zweckmäßigerweise in einer zur Längsachse 6 rechtwinkligen Ebene verläuft. Die an der Arbeitsspindel 14 angeordnete Gegenfläche 31' wird von der zum Zentrierkonus weisenden Stirnfläche 34 des Ringbundes 33 gebildet, die gleichzeitig auch die Abstützfläche für die Federanordnung 37 bildet. Bei diesem Ausführungs beispiel taucht der Zentrierkonus 21 vollständig in die Zentrieröffnung 23 ein, so daß der die Gegenfläche 31' tragende Randbereich 42 der Maschinenspindel 4 entgegen der Einsteckrichtung 25 gegenüber dem Zentrierkonus 21 vorragt.

Die Wirkungsweise ist hier die gleiche wie beim Ausführungsbeispiel aus Fig. 1, wobei allerdings hier kompaktere Abmessungen erzielt werden. Ferner erfolgt die axiale Einstellung des Zentrierkonus 21 über eine vorzugsweise gleichzeitig die Greifnut 28 aufweisende Stellschraube 45', die, an einem Passungsabschnitt 48 geführt, mehr oder winiger weit in die Stirnseite der Arbeitsspindel 14 einschraubbar ist, wobei ihr Kopf 49 gegen die zugewandte Stirnseite geringeren Durchmessers des Zentrierkonus 21 arbeitet.

Um der nunmehr erzielbaren präzisen Lagerung des Werkzeughalters 7 an der Maschine 1 auch durch eine ebenso qualitativ hochwertige Lagerung der Arbeitsspindel 14 im Werkzeughalter 7 Rechnung zu tragen, ist hier eine Radial-Axial-Lageranordnung 50 für die Arbeitsspindel 14 vorgesehen. Vorzugsweise handelt es sich hier um ein als Rollen- bzw. Nadellager ausgebildetes Radiallager 51, das in einer Vertiefung des Gehäuses 47 einsitzt und von einem Ring 52 gehalten ist, wobei es beidseits jeweils von einem Axial-Drucklager 53, 53' flankiert ist. Das eine Axiallager 53' liegt an einem Wellenbund 54 an, während das andere Axiallager 53 von einer auf die Spindel aufgeschraubten Stellmutter 55 beaufschlagt ist, so daß die Lagervorspannung wunschgemäß eingestellt werden kann.

Anstelle der Lageranordnung 50 können auch ein oder mehrere Radial-Axial-Kombinationslager verwendet werden.

Die abgebildeten Ausführungsbeispiele zeichnen sich durch besonders einfache Fertigung aus, da der den Greifflansch bildende Ringbund 36 gleichzeitig zur Abstützung der Federanordnung und evtl. der Maschinenspindel 4 (vgl. Fig. 3) dient. Separate Wellenbunde zur Abstützung erübrigen sich daher.

Ein weiterer Vorteil der erfindungsgemäßen Maschine ist ferner darin zu sehen, daß durch die Anordnung des Zentrierkonus 21 zwischen dem Ringbund 33 und dem jeweiligen Stellorgan 45, 45' eine verliersichere Anordnung gewählt ist, die auch bei abgenommenen Werkzeughalter verhindert, daß der hülsenförmige Zentrierkonus verloren geht.

Die Übertragung des Antriebs-drehmoments zwischen Maschinenspindel 4 und Arbeitsspindel 14 kann vorzugsweise ohne Änderung auf normalerweise übliche Art und Weise beibehalten werden, indem ein an der Maschinenspindel insbesondere stirnseitig angeordneter Ansatz bzw. Nutenstein formschlüssig in eine entsprechende Nut am Greifflansch eingreift, so daß eine verdrehfeste Fixierung zur Drehmomentsübertragung möglich ist (bei 65 in Fig. 1 und 3 gestrichelt angedeutet). Dadurch kann vorteilhafterweise auf eine Drehmomentsübertragung unmittelbar zwischen Zentrierkonus und Arbeitsspindel 14 verzichtet werden.

Die Erfindung kann insbesondere bei all den Werkzeugmaschinen verwirklicht werden, an denen rotierende Werkzeuge gehaltert werden müssen, z. B. Bohr- oder Fräsmaschinen.

## Ansprüche

1. Werkzeugmaschine wie Bohr- oder Fräsmaschine, mit einem Werkzeughalter für mindestens ein zu einer Rotationsbewegung antreibbares Bearbeitungswerkzeug, der lösbar an die Arbeitsseite der Maschine ankuppelbar ist, wobei ein Zentrierkonus seiner das Werkzeug treibenden Arbeitsspindel in eine komplementäre Zentrieröffnung einer motorisch antreibbaren Maschinenspindel der Maschine unter Anlage beider Konusflächen einsteckbar ist und wobei sich der Werkzeughalter zusätzlich mit mindestens einer zur Maschine weisenden Abstützfläche in Einsteckrichtung an einer zugewandten Gegenfläche der angekuppelten Maschine abstützt, dadurch gekennzeichnet, daß der Zentrierkonus (21) und die Arbeitsspindel (14) zwei separate Bauteile sind, daß der Zentrierkonus (21) in Axialrichtung (6) bewegbar geführt und gleichzeitig verdrehfest an der Arbeitsspindel (14) gelagert ist und daß zwischen dem Zentrierkonus (21) und der Arbeitsspindel (14) eine Federanordnung (37) vorgesehen ist, die den Zentrierkonus (21) gegenüber der Arbeitsspindel (14) in Einsteckrichtung (25) vorspannt.

2. Werkzeugmaschine nach Anspruch 1, dadurch gekennzeichnet, daß der Zentrierkonus (21) eine die Arbeitsspindel (14) koaxial umgebende Hülse ist.

3. Werkzeugmaschine nach Anspruch 1 oder 2, dadurch gekennzeichnet, daß die Federanordnung (37) ringförmig ausgebildet und koaxial auf der Arbeitsspindel (14) angeordnet ist.

4. Werkzeugmaschine nach einem der Ansprüche 1 bis 3, dadurch gekennzeichnet, daß die Federanordnung (37) zwischen einem an der Arbeitsspindel (14) auf der von der Maschine (1) abgewandten Seite des Zentrierkonus (21) angeordneten, evtl. unterbrochenen Ringbund (33) und dem Zentrierkonus (21) angeordnet ist, wobei zweckmäßigerweise der Ringbund von einem eine umlaufende Greiferrille (35) aufweisenden Greifflansch (36) gebildet ist, der zweckmäßigerweise einstückig mit der Arbeitsspindel (14) ausgebildet ist.

5. Werkzeugmaschine nach einem der Ansprüche 1 bis 4, dadurch gekennzeichnet, daß die Federanordnung (37) mindestens eine Tellerfeder (39) enthält und zweckmäßigerweise ein aus mehreren in Axialrichtung (6) aneinandergereihten Tellerfedern (39) bestehendes Tellerfederpaket ist.

6. Werkzeugmaschine nach einem der Ansprüche 1 bis 5, dadurch gekennzeichnet, daß der Zentrierkonus (21) an seiner entgegen der Einsteckrichtung (25) weisenden Stirnseite eine ringförmige Vertiefung (40) aufweist, in der die Federanordnung (37) zumindest zum Teil einsitzt.

7. Werkzeugmaschine nach einem der Ansprüche 1 bis 6, dadurch gekennzeichnet, daß die Druckkraft der Federanordnung (37) einstellbar ist, wobei an der Arbeitsspindel (14) der Federanordnung (37) axial gegenüberliegend und koaxial zu dieser angeordnet eine in Axialrichtung verstellbare Stellmutter (58) angeordnet sein kann, an der sich die Federanordnung abstützt oder zwischen der Federanordnung (37) und dem Zentrierkonus (21) und/oder der Arbeitsspindel (14) mindestens eine Distanzscheibe angeordnet sein kann.

8. Werkzeugmaschine nach einem der Ansprüche 1 bis 7, dadurch gekennzeichnet, daß der maximale axiale Verstellweg des Zentrierkonus (21) gegenüber der Arbeitsspindel (14) insbesondere stufenlos einstellbar ist.

Werkzeugmaschine nach einem der Ansprüche 1 bis 8, dadurch gekennzeichnet, daß die Arbeitsspindel (14) auf der zur Maschine (1) weisenden Einsteckseite des Zentrierkonus (21) eine in Axialrichtung (6) verstellbare Stellschraube (45') oder eine Stellmutter (45) trägt, an der der Zentrierkonus (21) insbesondere mit seiner einsteckseitigen Stirnseite anliegt.

10. Werkzeugmaschine nach einem der Ansprüche 4 bis 9, dadurch gekennzeichnet, daß der Zentrierkonus (21) zwischen dem Ringbund (33) und der Stellschraube (45') bzw. der Stellmutter (45) angeordnet ist, wobei seine axiale Länge geringer ist als der Abstand zwischen Ringbund (33) und Stellorgan (45, 45').

11. Werkzeugmaschine nach einem der Ansprüche 1 bis 10, dadurch gekennzeichnet, daß die Gegenfläche (31') für die Abstützfläche (29') des Werkzeughalters (7) an der Maschinenspindel (4) angeordnet ist, wobei sie vorzugsweise von der die Zentrieröffnung (23) umgebenden stirnseitigen Partie der Maschinenspindel (4) gebildet ist und zweckmäßigerweise an der Arbeitsspindel (4) angeordnet und hierbei insbesondere von der zum Zentrierkonus (21) weisenden Stirnfläche (34) des Ringbundes (33) gebildet ist.

12. Werkzeugmaschine nach einem der Ansprüche 1 bis 10, dadurch gekennzeichnet, daß die Gegenfläche (31) für die Abstützfläche (29) des Werkzeughalters (7) am Maschinenspindelkasten (2) bzw. am Spindelstock angeordnet ist.

13. Werkzeugmaschine nach einem der Ansprüche 1 bis 12, da durch gekennzeichnet, daß die Arbeitsspindel (14) im Werkzeughalter (7) über eine insbesondere spielfreie, hinsichtlich des Lagerspiels zweckmäßigerweise einstellbare Radial-Axial-Lageranordnung (50) gelagert ist, die sowohl Radialkräfte als auch in beide Richtungen wirkende Axialkräfte aufnimmt, wobei zweckmäßigerweise die Lageranordnung ein insbesondere als Rollenlager oder Nadellager ausgebildetes Radiallager (51) aufweist, das beidseits jeweils von einem Axiallager (53, 53') flankiert ist und wobei die Lageranordnung (50) der Arbeitsspindel (14) vorzugsweise zumindest von einer Axialseite her von einer auf der Arbeitsspindel (14) angeordneten Stellmutter beaufschlagt ist.

FIG. 1

EP 0 316 826 A2

FIG. 2

FIG. 3

FIG. 4